# EUROPEAN PATENT APPLICATION

(11) **EP 0 737 650 A2**
(43) Date of publication of application: **16.10.1996**
(21) Application number: 96105747.8
(22) Date of filing: 11.04.1996
(51) Int. Cl.: C02F 1/62, C02F 1/64, C02F 1/70, C02F 1/46

(54) **Method and plant for treating water for drinking or for industrial use**

(30) Priority: 13.04.1995 IT PD950071
(71) Applicant: S.I.D.A. SOCIETA' ITALIANA DEPURAZIONE ACQUE S.p.A., 35030 Sarmeola di Rubano (Padova) (IT)
(72) Inventor: Tiarca, Maurizio, 35100 Padova (IT); Tiarca, Raffaele, 35020 Legnaro (Padova) (IT)
(74) Representative: Modiano, Guido, Dr.-Ing.

(57) **Abstract**

The method consists in the treatment of water that contains, in solution, arsenic as the only pollutant, or water that contains arsenic in the presence of other pollutants, such as ammonia, methane, iron, manganese, by dissolving iron by electrolytic means in the water itself. The dissolved iron is oxidized into trivalent iron and the arsenic is oxidized from trivalent to pentavalent, by means of the aeration of the water, with consequent saturation in dissolved oxygen. The dissolved oxygen, by means of the catalysis of metal oxides that are present on the surface of a filtering granulate, is able to oxidize the iron and the arsenic, which co-precipitate together directly on the surface of the filtering granulate, increasing the thickness of the film.

## Description

The present invention relates to a method for treating drinking water or water for industrial use containing arsenic in solution as its only pollutant or water containing arsenic in the presence of other pollutants such as ammonia, methane, iron, manganese, and to a plant for carrying out said method.

Underground water, and sometimes even surface water, is often characterized by the presence, in solution, of variable amounts of arsenic and/or soluble salts thereof; if the water is for drinking or even industrial use, where necessary, the content of said metal must be reduced considerably and in any case reduced to a value within the parameters allowed by currently applicable statutory provisions related to water for drinking or industrial use.

In the current art, this treatment is performed by using massive doses of trivalent iron or aluminum, subsequently performing oxidation of the arsenic to the pentavalent form by introducing in said water doses of strong oxidizing agents such as ozone, chlorine dioxide, hypochlorite, and hydrogen peroxide.

Pentavalent arsenic is adsorbed and/or co-precipitated by the hydrated iron or aluminum oxides; the oxide particles that also contain arsenic are retained and separated from the water either by clarification and subsequent filtration or by filtration on sand filters or other filtering materials.

These filters are not free from drawbacks, such as lack of versatility, since whenever the amount of water to be treated varies, particles of iron, aluminum, and arsenic may escape as a result of the poor cohesion of said particles to the filtering bed.

Thus, the values of the residues of arsenic and of the co-precipitating metal oxides might still be high, and even above the limits set by statutory provisions, at the output of the filters.

Consequently low filtration rates and high plant costs must be adopted.

If arsenic is present together with other pollutants such as ammonia, the treatment becomes even more complicated, since it is necessary to use a specific stage for removing the ammonia separately from the removal of the arsenic.

The only alternative that can be used to simultaneously remove arsenic and ammonia so far is the use of an oxidizing agent such as chlorine or sodium hypochlorite, which often form undesirable and tumorigenic compounds by reacting with the normal organic substances that are present in water.

An aim of the present invention is to eliminate the drawbacks described above, providing an arsenic removal method that does not require the use of a strong oxidizing agent as mentioned above.

An object of the invention is to obtain filtered water containing extremely low residual levels of arsenic and iron and/or aluminum salts.

Another important object is to avoid as much as possible the danger of penetration of the iron and/or aluminum oxides through the filtering bed.

Another object is to utilize to the maximum possible extent the ability of iron to absorb and/or co-precipitate arsenic.

With this aim, these and other objects in view, there is provided a method for removing arsenic and/or iron and/or manganese and/or ammonia from water for drinking or industrial use, which consists in:
-- dissolving iron in the water by electrolytic means;
-- aerating the water to oxidize the iron into trivalent iron and the arsenic from trivalent to pentavalent with consequent saturation in dissolved oxygen;
-- passing the water over a filtering granulate comprising metal oxides to oxidize, by means of the dissolved oxygen, the iron and the arsenic, which co-precipitate together.

Further characteristics and advantages of the invention will become apparent from the description of a preferred but not exclusive embodiment thereof, illustrated only by way of non-limitative example in the accompanying drawing, wherein:

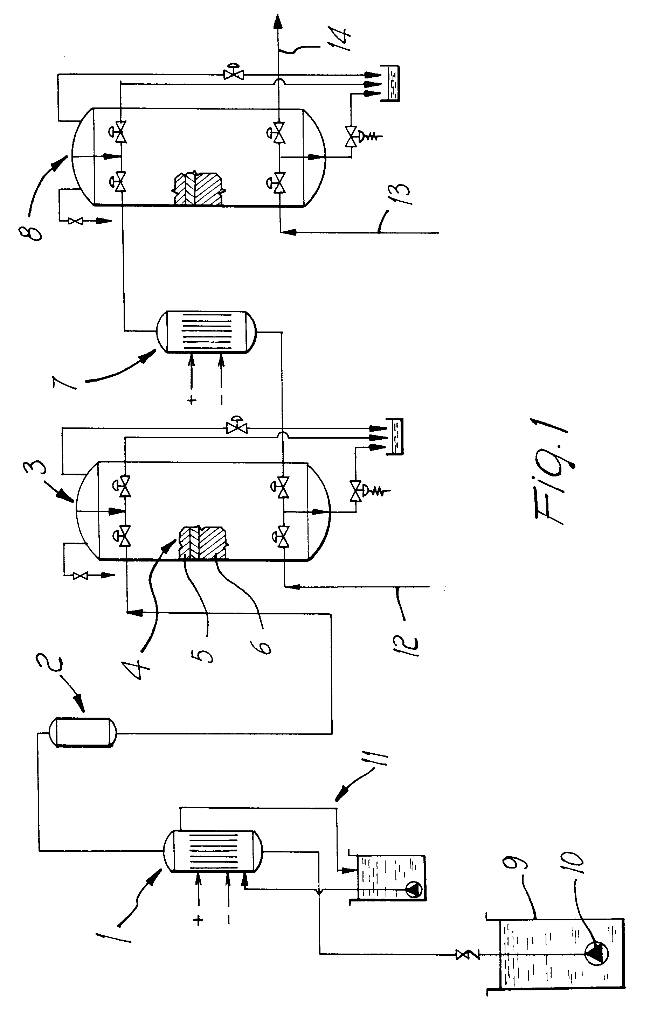

figure 1 is a schematic view of the plant for carrying out the method according to the invention.

With reference to the above figure, the method for treating water for drinking or industrial use, which consists of a plurality of consecutive steps, is performed in a first tank 1, which contains an electrolytic cell in which the electrodes are constituted by iron plates or profiles having another shape; in a second tank 2, where degassing and/or aeration of the water to be treated occurs; and in a first filter 3, which contains the filtering mass 4, which is constituted by one or more layers 5 and 6 of quartz or dolomite-based monocrystalline granulates, or monocrystalline granulates having a high silica content.

The filtering mass 5 and 6, which can have a uniform or variable particle size, is initially prepared so as to form a catalytic mass by covering said mass with a film of iron oxides and with a film of nitrifying and/or iron-oxidizing and/or manganese-oxidizing and/or arsenic-oxidizing and/or methane-oxidizing bacteria.

There is a third tank 7 that contains a second electrolytic cell, like the previously described one, and a second filter 8 like the previously described filter 3.

Downstream of the second filter 8, or in replacement of the third tank 7, there may also be a fourth tank, not shown, where doses of a water sanitizer are introduced where prescribed by applicable statutory provisions or by technological use.

All these tanks and filters also have various flow blocking valves, flow diverting valves for periodic washing of the electrolytic cells with hydrochloric acid, for the counter-current washing of the filters, etcetera.

In figure 1, the reference numeral 9 designates the untreated water tank, the reference numeral 10 designates the pump that delivers the untreated water from said tank to the plant, the reference numeral 11 designates the entire circuit for washing the first tank 1, the reference numeral 12 designates the duct for the water for washing the first filter 3, the reference numeral 13 designates the duct for the water for washing the second filter 8, and the reference numeral 14 designates the duct of the treated water that leaves the plant.

The first step of the method consists in initially converting the filtering masses of the filters from inert to catalytic and enriched with biofilms, which are obtained initially by producing a closed-circuit circulation of the water to be treated over the entire plant and simultaneously enriching said water with divalent iron dissolved in the electrolytic cells and with ammonia that is metered artificially by means of an appropriate dosage plant.

After a period of approximately 20-40 days, during which the plant operates in a closed cycle with enrichment of the water with iron and ammonia, the filtering mass becomes catalytic and supports an amount of biofilm that is sufficient to oxidize the amount of ammonia and/or iron and/or methane and/or manganese required therein.

The second step consists in causing the water to be treated to flow in an open-cycle current through the electrolytic cells 1, the degassing and oxidizing unit 2, the filter 3, the electrolytic cell 7, and the filter 8.

The film of iron oxides that is present on the filtering masses of the filters 3 and the biofilm that is simultaneously present on said filtering masses allow oxidation of the arsenic to the pentavalent form, oxidation of the iron to the insoluble trivalent form, the coprecipitation and absorption of the arsenic on the newly formed iron film, and at the same time the biofilm that is present on the filtering masses allows oxidation of ammonia to a nitrate, of methane to carbon dioxide, and of manganese to manganese dioxide, so that at a certain point it is necessary to perform counter-current washing of the filtering masses to remove the excess biological film that has formed and the excess of retained insoluble iron salts.

The third step consists indeed in the counter-current washing of the filtering masses, which occurs by feeding water and air in countercurrent onto the filtering masses, discarding the washed-off sludge in the sewage system or in an appropriate treatment facility.

The fourth step consists in washing the electrolytic cells with hydrochloric acid or other acid, in order to restore the surface of the electrodes, which become covered with sludges formed by salts of calcium and iron.

The method for metering out the iron by electrolytic means allows to use biological filtration methods to remove the iron and the ammonia at the same time, since it remains in soluble form until it arrives onto the first layers of the filtering masses where, due to the superficial catalytic action of the other iron oxides already present on the surface of the masses, it is oxidized by the dissolved oxygen, forming to a large extent a new, more superficial layer of iron oxide film, which is also capable of catalyzing the oxidation of the arsenic from the trivalent form to the pentavalent form, which is easier to co-precipitate and absorb.

The first layers of the filtering mass thus capture over 99% of the iron that is metered out, which according to known statutory provisions on co-precipitation absorption removes a certain amount of the arsenic that is present.

The lower layers of the filtering masses, undisturbed by sanitizing strong oxidizing agents, can support and enhance the growth of an organic biomass in the form of an organic filter, which can oxidize methane, ammonia, and manganese where they are present.

If the amount of arsenic that is present exceeds certain values in the water to be treated, one or more stages, fully identical to the one described, are necessary to achieve the lower limits prescribed by statutory provisions.

Of course, if only arsenic is present in the water, the plant operates excellently nonetheless.

Furthermore, one obtains an important advantage in this new procedure; namely, that it is not necessary to use a strong oxidizing agent such as chlorine, sodium hypochlorite, chlorine dioxide, ozone, hydrogen peroxide or permanganate, which are in any case dangerous in use and in the secondary reactions that they can develop.

Furthermore, the iron that is metered out has maximum arsenic absorption effectiveness, since it deposits on the enormous free surface of the filtering mass, forming a new, extremely thin film continuously.

Therefore, for an equal content of arsenic, the possibility of using natural or pure dissolved oxygen as oxidizing agent and of metering out the iron in electrolytic form allows to use a smaller amount of iron, according to the arsenic that is present and the longest filtration cycles.

Another advantage is that the iron, by oxidizing directly on the surface of the granulate and forming a new film, is bonded to the filtering mass far more strongly, thus avoiding the danger of penetration through the bed of sludge of the filter.

From what has been described and illustrated, it is evident that the method and the plant that have been devised have achieved the intended aim and all the objects and are extremely simple but equally effective in obtaining, on one hand, excellent characteristics of the treated water and, on the other hand, considerably reduced operating costs, achieving extreme flexibility of the plant, since it is possible to increase the iron dosage up to 4-5 ppm in the water to be treated without any contraindication at all, such as the release of iron into the treated water or prevention of the simultaneous removal of other pollutants that are present in the water by biological means.

Of course, the method and the plant thus conceived may be susceptible of numerous modifications and variations, all of which are within the scope of the inventive concept.

Thus, for example, the plant can also be part of a more complex plant that also includes, in combination, an plant according to the prior art.

All the details may furthermore be replaced with other technically equivalent elements, and therefore the materials, the dimensions, and the components that are used may also be any according to the requirements, the capacity of the plant, or to other contingencies.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Method for treating water for drinking or industrial use, which consists in:
-- dissolving iron in the water by electrolytic means;
-- aerating the water to oxidize the iron into trivalent iron and the arsenic from trivalent to pentavalent with consequent saturation in dissolved oxygen;
-- passing the water over a filtering granulate that comprises metal oxides to oxidize, by means of the dissolved oxygen, the iron and the arsenic, which co-precipitate together.

2. Method according to claim 1, characterized in that it comprises, prior to the dissolving of iron in the water, an initial conversion of the filtering masses of said granulate from inert to catalytic.

3. Method according to one or more of the preceding claims, characterized in that it comprises, prior to the dissolving of iron in the water, the seeding and growing, on the filtering granulate, of bacteria of the nitrifying species, up to a concentration that is suitable to treat the amount of ammonia that is present in the water to be treated, and/or iron-oxidizing and/or manganese-oxidizing and/or arsenic-oxidizing and/or methane-oxidizing bacteria.

4. Method according to one or more of the preceding claims, characterized in that it comprises, after the initial conversion of said filtering masses and after seeding, the circulation of the water to be treated in a closed cycle through the entire plant and the simultaneous enrichment of said water with divalent iron dissolved in the electrolytic cells and with ammonia metered out artificially by means of a dosage plant.

5. Method according to claim 1, characterized in that it comprises, after the passage of the water over said filtering masses that comprise metallic oxides, the counter-current washing of the filtering masses to remove the excess biological film that has formed and the excess of retained insoluble iron salts.

6. Method according to claim 5, characterized in that said counter-current washing is performed by sending water and air in countercurrent on the filtering masses, discarding the washed-off sludge in the sewage system or in a treatment facility.

7. Method according to one or more of the preceding claims, characterized in that it periodically comprises washing of the electrolytic cells with hydrochloric acid or with another acid to restore the surface of the electrodes that become covered with sludges of calcium and iron salts.

8. Method according to claim 1, characterized in that said aeration is performed by oxidation under pressure or by degassing with air at atmospheric pressure and/or under pressure or by direct injection of pure oxygen in the water.

9. Method according to one or more of the preceding claims, characterized in that it can provide for the dosage of a water sanitizer.

10. Plant for performing a method according to one or more of the preceding claims, characterized in that it comprises: at least one first tank, which contains an electrolytic cell in which the electrodes are constituted by a plate or another profiled element made of iron, at least one second tank, in which the degassing and/or aeration of the water to be treated occur, and at least one first filter, which contains a filtering mass.

11. Plant according to claim 10, characterized in that said filtering mass is constituted by one or more layers of monocrystalline granulates of quartz or having a high content of silica or based on dolomite.

12. Plant according to claim 11, characterized in that said filtering mass has a uniform or variable particle size.

13. Plant according to one or more of claims 10 to 12, characterized in that it comprises, downstream of said first filter, at least one third tank that contains a second electrolytic cell like said first one.

14. Plant according to one or more of claims 10 to 13, characterized in that it comprises, downstream of said third tank, at least one second filter like said first one.

15. Plant according to one or more of claims 10 to 14, characterized in that it can comprise, downstream of said second filter or in replacement of said third tank, a fourth tank for the dosage of a water sanitizer.

16. Plant according to one or more of claims 10 to 15, characterized in that all of said tanks and filters have a plurality of valves for blocking the flow, for diverting the flow, for periodic washing with hydrochloric acid of the electrolytic cells for the counter-current washing of the filters.

17. Plant according to one or more of claims 10 the 16, characterized in that it comprises a circuit with blocking means that are arranged upstream and downstream of said first electrolytic cell for washing it periodically with hydrochloric acid.
